# EUROPEAN PATENT APPLICATION

(11) **EP 4 242 256 A1**
(43) Date of publication of application: **13.09.2023**
(21) Application number: 22160587.6
(22) Date of filing: 07.03.2022
(51) Int. Cl.: C08K 3/04, C08K 3/26, C08L 77/02, C08K 5/098

(54) **IMPROVED GRAPHENE AND GRAPHENE OXIDE DISPERSION BY IN-SITU CHEMICAL MODIFICATION DURING PROCESSING**

(71) Applicant: SHPP Global Technologies B.V., 4612 PX Bergen op Zoom (NL)
(72) Inventor: LUGGER, Jody Ann Martin, Bergen op Zoom (NL); MERCX, Franciscus Petrus Maria, Bergen op Zoom (NL); JANSE, Jochem, Bergen op Zoom (NL)
(74) Representative: Dehns

(57) **Abstract**

Disclosed is a composition comprising from about 60 wt. % to about 99.85 wt. % of a polar polymer resin, from about 0.05 wt. % to about 20 wt. % of graphene; and from about 0.001 wt. % to about 8 wt. % of a base additive, wherein the graphene and base additive are combined in the composition to provide a modified graphene, wherein a molded sample of the composition exhibits a greater multi-axial impact strength than a reference composition in the absence of the base additive when tested in accordance with ISO 6603, wherein the combined weight percent value of all components does not exceed 100 wt. %, and all weight percent values are based on the total weight of the composition.

## Description

### FIELD OF THE DISCLOSURE

The present disclosure relates to polymer materials exhibiting improved graphene and graphene oxide dispersion.

### BACKGROUND OF THE DISCLOSURE

Graphene and graphene oxide are desirable conductive fillers for polymer resins. These materials generally feature a high aspect ratio, high strength, high electrical and thermal conductivity. Small levels of graphene are known to improve mechanical properties. Graphene and graphene oxide are also considered more cost effective than graphite or carbon black counterparts as loadings of graphene and graphene oxide are significantly lower to impart similar effects. Particularly, for applications where heat management, or electrical conductivity would play parts, graphenes are generally expected to outperform current solutions given their high aspect ratio and good inherent electrical and thermal conductivity. However, such enhanced performance has not been realized as graphene and graphene oxide appear to be hampered by poor dispersion in polymer resin matrices. Aspects of the present disclosure addresses these and other needs.

### SUMMARY

Aspects of the disclosure relate to a composition comprising (i) from about 60 wt. % to about 99.85 wt. % of a polar polymer resin, (ii) from about 0.05 wt. % to about 20 wt. % of graphene; and (iii) from about 0.001 wt. % to about 8 wt. % of a base additive, wherein the graphene and base additive are combined in the composition to provide a modified graphene, wherein a molded sample of the composition exhibits a greater multi-axial impact strength than a reference composition in the absence of the base additive when tested in accordance with ISO 6603, wherein the combined weight percent value of all components does not exceed 100 wt. %, and all weight percent values are based on the total weight of the composition.

### BRIEF DESCRIPTION OF THE FIGURES

The accompanying figures, which are incorporated in and constitute a part of this specification, illustrate several aspects and together with the description serve to explain the principles of the disclosure.
FIG. 1 shows Table 7 presenting the specific volume resistivity (SVR) of PA6/graphene compositions with the addition of a base additive.

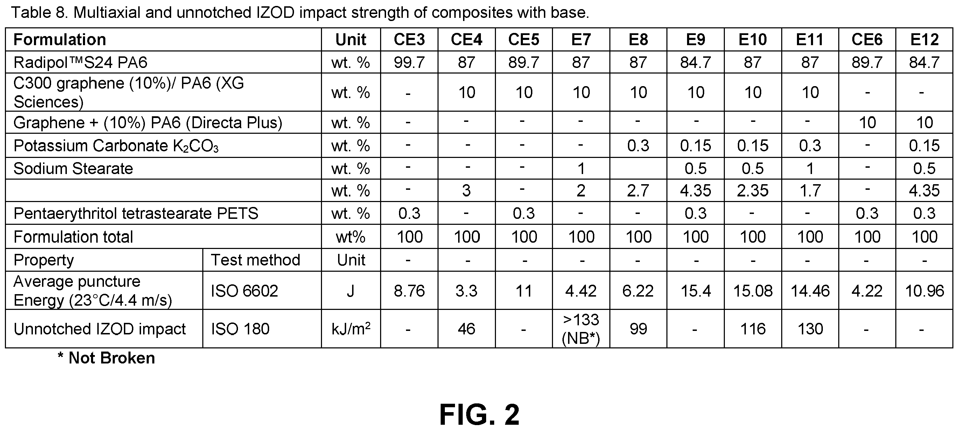

FIG. 2 shows Table 8 presenting the multi-axial and unnotched Izod impact strength of PA6/graphene compositions with the addition of a base.
FIG. 3 is a graphical representation of the Izod impact strength as a function of the average puncture energy and unnotched Izod Impact strength of the samples.
FIG. 4 shows Table 9 presenting the average puncture energy and unnotched Izod Impact strength of PP/graphene compositions with the addition of a base.

### DETAILED DESCRIPTION

The emergence of high aspect ratio, high strength, highly conductive (electrically and thermally) graphene and or graphene oxide particles came with anticipated benefits of having improved effectiveness at lower loading levels when compared to traditional conductive fillers such as graphite and carbon black. Theoretically, the performance of graphene and or graphene oxides should surpass competitive fillers with respect to thermal conductivity, electrical conductivity, impact improvement, and cost, for example. At the present however such improvements have barely been realized as performance has been hampered by poor dispersion quality. Graphenes and graphene oxides are known to aggregate or agglomerate, reducing their efficacy in a polymer system. During processing further exfoliation and breaking up of the agglomerates of the dispersant graphene takes place, and by addition of surfactants, stabilizers, reactive polymers, the exfoliated small particulates can be stabilized and trapped in their smaller form further enhancing the dispersant's efficacy. Conventional attempts to improve graphene and or graphene oxide dispersions include the use of more rigorous mechanical mixing and the use of surfactants to help separate graphene/graphene oxide agglomerates and aggregates -- albeit with very limited success.

US Patent Publication 20160251506A1 discloses polypropylene-graphene composites featuring a pre-modified graphene via treatment with amino-alkyl tri-alkoxy silane activating agents and ultrasonic waves. The disclosure does not address improved graphene dispersion.

CN Patent Application 105400157A discloses dispersion of graphene in a polymer matrix using Lewis acid catalysts, such as aluminum chloride AlCl₃, which are not consumed in the formation of the composite.

Song, et. al, "Fabrication of exfoliated graphene-based polypropylene nanocomposites with enhanced mechanical and thermal properties," discloses exfoliated graphene-based polypropylene nanocomposites where the graphene is coated with polypropylene latex prior to forming the nanocomposite. (Polymer, Vol. 52, Issue 18, 18 August 2011, pg. 4001-4010).

Wan, et. al, "Improved dispersion and interface in the graphene/epoxy composites via a facile surfactant-assisted process," discloses graphene-epoxy composites where the surface of the graphene is pre-treated prior to forming the composite. (Composites Science and Technology, Vol. 82, pg. 60-68).

Zhang, et. al, "Preparation of dispersible graphene oxide as a filler to increase the thermal stability of a flame retarding polymer," discloses composites including a graphene oxide modified with polyethylene glycol mono-methyl ether via esterification. (Carbon, Volume 56, May 2013, pg. 394).

Without wishing to be bound to any particular theory, to prevent agglomeration, and to eliminate any net attractive forces, the particles can be coated with a reactive polymer layer (sterically hindering agglomeration). A second mode of action is by introducing a net positive or negative charge on the particles so they start to repel each other, with the result of drastically improving the dispersion. Compositions of the present disclosure enhance graphene/graphene oxide performance and efficacy by further optimizing their dispersion or availability in polymers/elastomers/plastics. Dispersion may be enhanced by chemically modifying the reactive groups inherently present on these graphene/graphene oxide particles during processing. Further disclosed herein is a methodology for preparing improved graphene and/or graphene oxide dispersions in polymers and plastics. In certain aspects, the preparation entails an in-situ chemical modification step of the dispersant graphene or graphene oxide during melt extrusion. The in-situ preparation generates a surface-modified graphene. The methodology may feature a compounding operation where chemical groups inherent on the graphene/graphene oxide are reacted with a base additive during compounding in an extruder together with a thermoplastic polymer and/or elastomer to achieve improved dispersion.

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that an order be inferred, in any respect. This holds for any possible non-express basis for interpretation, including: matters of logic with respect to arrangement of steps or operational flow; plain meaning derived from grammatical organization or punctuation; and the number or type of embodiments described in the specification.

### Thermoplastic Composition

Aspects of the disclosure relate to a composition comprising a polar polymer resin, graphene, and a base additive. The polar polymer resin component may include any suitable polar thermoplastic polymer. Examples include, but are not limited to, polycarbonate, polyetherimide, liquid crystal polymer, polyamide, polyimide, polyester, copolymers thereof, blends thereof, or combinations thereof.

In certain aspects, the composition exhibits improved properties when compared to a graphene-filled reference composition in the absence of the base additive thereby indicating improved graphene dispersion. For example, the composition may exhibit greater electrical conductivity characterized as a lower surface resistivity than a reference composition in the absence of the base additive when tested in accordance with ASTM D4496. This is particularly evident at loadings of 1wt. % to 10 wt. % graphene. In yet further examples, the disclosed compositions have improved impact strength properties. The composition may exhibit a greater multi-axial impact strength than a reference composition in the absence of the base additive when tested in accordance with ISO 6603.

A molded plaque formed from the disclosed composition may be suitable as an external or internal component of an electric device used in microwave absorbing or shielding applications.

In various aspects, the present disclosure provides composition materials or compositions useful for the manufacture of electrostatic dissipative housings, materials/parts with improved barrier properties, thermally conductive materials/parts/housings, or parts/housings with improved impact performance, for example.

### Polar Polymer Resin

In an aspect, the polymer composition may comprise a polar thermoplastic polymer resin. As used herein, a polar polymer resin may include those containing polar groups such as esters, ethers, ketones, amides, amines, alcohols, phenols, halides, acids. Anhydrides, sulfides, nitriles, isocyanates, aromatic and heteroaromatic homopolymers, copolymers, and terpolymers. These polar substituents can be found on the polymer's backbone, or at the polymer's backbone, or attached to an aromatic group incorporated into the polymer's backbone or dangling from the polymer's backbone. Suitable examples include C2 to C20. An olefin, such as a copolymer of ethylene and / or propylene and / or butene, with one or more polar monomers such as a vinyl ester or alcohol, an acid, an anhydride, a glycidyl, a propylene or methacrylic acid or ester. The polar polymer may also include any thermoplastic copolymer containing a functional group capable of reacting with a base additive as described further herein.

In various aspects of the present disclosure, the polar polymer resin may comprise a polyamide. As used herein, a polyamide is a polymer having repeating units linked by amide bonds, and can include aliphatic polyamides (PA) (e.g., the various forms of nylon such as nylon 6 (PA6), nylon 66 (PA66) and nylon 9 (PA9)), polyphthalamides (e.g., PPA/high performance polyamide) and aramides (e.g., para-aramid and meta-aramid).

Polyesters have repeating units of the following formula (A): 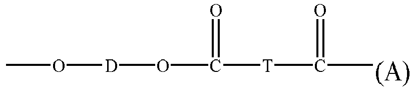 wherein T is a residue derived from a terephthalic acid or chemical equivalent thereof, and D is a residue derived from polymerization of an ethylene glycol, butylene diol, specifically 1,4-butane diol, or chemical equivalent thereof. Chemical equivalents of diacids include dialkyl esters, e.g., dimethyl esters, diaryl esters, anhydrides, salts, acid chlorides, acid bromides, and the like. Chemical equivalents of ethylene diol and butylene diol include esters, such as dialkylesters, diaryl esters, and the like. In addition to units derived from a terephthalic acid or chemical equivalent thereof, and ethylene glycol or a butylene diol, specifically 1,4-butane diol, or chemical equivalent thereof, other T and/or D units can be present in the polyester, provided that the type or amount of such units do not significantly adversely affect the desired properties of the thermoplastic compositions. Poly(alkylene arylates) can have a polyester structure according to formula (A), wherein T comprises groups derived from aromatic dicarboxylates, cycloaliphatic dicarboxylic acids, or derivatives thereof.

Examples of specifically useful T groups include, but are not limited to, 1,2-,1,3-, and 1,4-phenylene; 1,4- and 1,5-naphthylenes; cis- or trans- 1,4-cyclohexylene; and the like. Specifically, where T is 1,4-phenylene, the poly(alkylene arylate) is a poly(alkylene terephthalate). In addition, for poly(alkylene arylate), specifically useful alkylene groups D include, for example, ethylene, 1,4-butylene, and bis-(alkylene-disubstituted cyclohexane) including cis- and/or trans- 1,4-(cyclohexylene)dimethylene.

Examples of polyalkylene terephthalate include polyethylene terephthalate (PET), poly(1,4-butylene terephthalate) (PBT), and poly(propylene terephthalate) (PPT). Also useful are poly(alkylene naphthoates), such as poly(ethylene naphthanoate) (PEN), and poly(butylene naphthanoate) (PBN). A useful poly(cycloalkylene diester) is poly(cyclohexanedimethylene terephthalate) (PCT). Combinations including at least one of the foregoing polyesters may also be used.

Copolymers including alkylene terephthalate repeating ester units with other ester groups can also be useful. Useful ester units can include different alkylene terephthalate units, which can be present in the polymer chain as individual units, or as blocks of poly(alkylene terephthalates). Specific examples of such copolymers include poly(cyclohexanedimethylene terephthalate)-co-poly(ethylene terephthalate), abbreviated as PETG where the polymer includes greater than or equal to 50 mol % of poly(ethylene terephthalate), and abbreviated as PCTG where the polymer comprises greater than 50 mol % of poly(1,4-cyclohexanedimethylene terephthalate). Poly(cycloalkylene diester)s can also include poly(alkylene cyclohexanedicarboxylate)s. Of these, a specific example is poly(1,4-cyclohexane- dimethanol-1,4-cyclohexanedicarboxylate) (PCCD), having recurring units of formula (B): 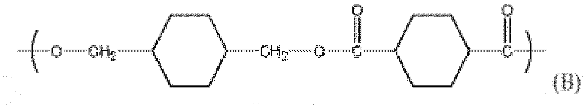 wherein, as described using formula (A), R² is a 1,4-cyclohexanedimethylene group derived from 1,4-cyclohexanedimethanol, and T is a cyclohexane ring derived from cyclohexanedicarboxylate or a chemical equivalent thereof, and can comprise the cis-isomer, the trans-isomer, or a combination comprising at least one of the foregoing isomers.

Certain aspects of the composition include from about 50 wt. % to about 99.85 wt. % of a polar polymer resin, or from about 40 wt. % to about 99 wt. % of a polymer base resin, or from about 55 wt. % to about 99 wt. % of a polymer base resin, or from about 60 wt. % to about 99 wt. % of a polymer base resin. In yet further aspects, the composition may comprise from about 70 wt. % to about 99.85 wt. % of a polyamide, or from about 40 wt. % to about 99.85 wt. % of a polyamide, or from about 55 wt. % to about 99.85 wt. % of a polyamide, or from about 60 wt. % to about 95 wt. % of a polyamide, or from about 75 wt. % to about 98.5 wt. % of a polyamide.

### Graphene/Graphene Oxide

In various aspects, the composition comprises a graphene or graphene oxide. Graphene may refer to one or more of one-atom-thick planar sheets of sp² bonding carbon atoms densely packed in a honeycomb crystal lattice. In principle graphene is a single layer of carbon atoms with each atom bound to three carbon atoms in a honeycomb structure (see ISO 80004-13 standard). But the term graphene has also been used to describe stacks of multiple graphene layer sheets. In the context of the present disclosure, "graphene" next to the single layer of carbon atoms (ISO 80004-13) may further encompass graphene nanoplatelets, defined by IS080004-13 as having a typical thickness of 1 to 3 nanometer as well as thicker stacks of graphene layers with a thickness of 3 to 100 nanometer. The number of graphene layers may be determined by any suitable method known in the art. For example, the number of graphene layers may be determined using Raman spectroscopy and transmission electron microscopy (TEM).

Graphene oxide may refer to the oxidized form of graphene and may be characterized as a single-atomic-layered material that is formed by the oxidation of graphite.

As used herein, graphene, graphene oxide, or another graphene material may include but is not limited to graphene, a graphene layer, a bilayer graphene, a trilayer graphene, a multi-layer graphene, a few-layer graphene, a graphene quantum dot, a graphene oxide, a reduced graphene oxide, or the like. The graphene-based structures may have a flake or film or flattened morphology. Graphene platelets may be oxidized to various extents during their preparation, resulting in graphite oxide (GO) platelets.

The graphene or graphene oxide of the present disclosure may comprise an average number of laminated layers which may be less than 100, for example less than 50. In certain aspects, an average number of the laminated layers is no greater than 30, such as no greater than 20, no greater than 10, or in some cases no greater than 5. The graphene may be substantially flat, but at least some of the flat sheets may be substantially bent, rolled, wrinkled, or squashed. Typically, the particles have no spherical or equiaxed morphology.

Graphene may be characterized herein as a platelet shaped filler. Graphene or graphene oxide of the present disclosure may have a platelet thickness of less than or equal to 10 nanometers, less than 5 nanometers, or, in certain aspects, less than 4 or 3 or 2 or 1 nm. A typical graphene platelet may have a size from about 1 µm to about 5 µm. In further examples, the graphene may have a size of from about 0.5 microns (µm) to about 50 µm. In certain aspects, the graphene carbon particles may be as thick as 3, 6, 9, 12, 20 atomic layers or 30 atomic layers thicker or more in a single atomic layer. In some examples, the graphene is a few layer graphene, having fewer than about 12, fewer than about 10, or fewer than about 8 graphene layers. Graphite nanoplatelets may have more than 10 layers, but a thickness less than100 nm.

In certain aspects, the graphene carbon particles in the composition of the present invention have a diameter of at least 50 nanometers, e.g., greater than 100 nanometers, measured in a direction parallel to the carbon atom layer, in some cases greater than 100 nanometers to 500 nanometers, or 100 and have widths and lengths in excess of nanometers to 200 nanometers. Graphene carbon particles may be provided in the form of extremely thin flakes, platelets, or sheets having a relatively high aspect ratio, such as greater than 3: 1, such as greater than 10: 1 Defined as the ratio of the longest dimension to the shortest dimension of the particle size).

In yet further examples, the graphene may have a surface area of from about 15 square meters per gram (m²/g) to about 500 m²/g, or greater than 20 m²/g, or from about 20 m²/g to about 500 m²/g, or from about 100 m²/g to about 500 m²/g.

Current practices for preparing graphenes may introduce a small portion of oxygenated chemical sites on the particle its surface. Although the amount of oxygen differs among graphene/graphene oxide suppliers, residual acidic oxygen groups remain present on the graphene and or graphene oxide in the form of carboxylic acid groups and or phenol groups, for example. When in a neutral state such groups add attractive forces to the existing Van der Waals forces between the particles resulting in improved aggregation/agglomeration of the particles, embedding high concentrations of attractive particles in a polymer matrix further enhances agglomeration. In certain aspects, the graphene carbon particles used in the compositions of the present disclosure may have a relatively low oxygen content. As an example, the graphene may have an oxygen content up to 15%, up to 12%, or up to 10% based on the total weight of the graphene. The oxygen content of the graphene carbon particles can be measured using X-ray photoelectron spectroscopy (DR Dreyer et al., Chem. Soc. Rev. 39, 228-240 (2010)).

In further aspects, the graphene of the disclosed compositions are at least 50 square meters per gram, such as from 70 to 1000 square meters per gram, or in some cases from 200 to 1000 square meters per gram, or from 200 to 400 square meters per gram. The graphene may have a specific surface area, namely a specific "BET specific surface area." The term "BET specific surface area" as used herein refers to the specific surface area measured by nitrogen adsorption according to the ASTM D 3663-78 standard based on the Brunauer-Emmett-Teller process ("The Journal of the American Chemical Society "60, 309 (1938)). Suitable commercially available graphene may include C300 having an average surface area of 300 m²/g and may be available as XGPP 6301-D from XG-Sciences (a masterbatch containing 10 wt.% C300 graphene in polypropylene).

In certain aspects, the graphene may have a relatively low bulk density. For example, the graphene carbon particles used in certain embodiments of the present invention are characterized by having bulk densities (work densities) of less than 0.5 g/cm ³, such as less than 0.4 g/cm ³ or from about 0.2 g/cm³ to about 0.4 g/cm³. For the purposes of the present disclosure, the bulk density of graphene may be measured by placing 0.4 grams of graphene carbon particles in a glass measuring cylinder with a readable scale.

The composition may comprise from about 0.05 wt. % to about 20 wt. % of a graphene or graphene oxide, or from about 0.05 wt. % to about 25 wt. % of a graphene or graphene oxide, or from about 0.05 wt. % to about 18 wt. % of a graphene or graphene oxide, or from about 0.05 wt. % to about 17 wt. % of a graphene or graphene oxide. In certain examples, the graphene or graphene oxide may be combined in a masterbatch.

### Base Additive

As provided herein, compositions of the present disclosure may comprise a base additive. The base additive may refer to organic or inorganic bases or compounds with the ability to react with, or neutralize, acids to form salts. Generally, the base additive may further describe a compound having a lone pair of electrons allowing the compound to act as a proton acceptor; or, a compound that donates electrons; or, a compound that releases hydroxide ions in aqueous solution.

The base additive may be a Bronsted base or a Lewis base well known in the art, including by way of example only, amine bases (for example, triethylamine, trimethylamine,), hydrides (for example, sodium, lithium or potassium hydride), alkoxides (e.g. sodium or potassium tert-butoxide), carbonates (for example, sodium carbonate or bicarbonate, potassium or cesium carbonate) or phosphates (for example, potassium phosphate). In certain aspects, the base is a carbonate of alkali or alkali earth metals (e.g., sodium, potassium, cesium, barium, etc.). In an example, the base additive comprises potassium carbonate.

Examples of bases may include, but are not limited to, hydroxide, alkoxides, metal amides, metal hydrides, metal dialkylamides and arylamines, wherein; alkoxides include lithium, sodium and potassium salts of methyl, ethyl and t-butyl oxides; metal amides include sodium amide, potassium amide and lithium amide; metal hydrides include sodium hydride, potassium hydride and lithium hydride; and metal dialkylamides include sodium and potassium salts of methyl, ethyl, n-propyl, i-propyl, n-butyl, t-butyl, trimethylsilyl and cyclohexyl substituted amides. In specific examples, the base additive may comprise potassium hydrogen carbonate, sodium acetate, potassium acetate, sodium formate, potassium carbonate, sodium stearate, and potassium formate, or a combination thereof.

The present disclosure may further comprise salt forms of the compounds described herein. Examples of salts (or salt forms) include, but are not limited to, mineral or organic acid salts of basic residues such as amines, alkali. Generally, the salt forms may be prepared by reacting the free base with stoichiometric amounts or with an excess of the desired salt-forming inorganic or organic base in a suitable solvent or various combinations of solvents. Pharmaceutically acceptable base addition salts may be formed with inorganic and organic bases. Inorganic bases from which salts can be obtained include, for example, hydroxides of sodium, potassium, lithium, ammonium, calcium, magnesium, iron, zinc, copper, manganese, aluminum, and the like.

In certain aspects, the base additive may include those described herein and pharmaceutically acceptable salts or salts thereof. The terms "pharmaceutically acceptable salts" or "a salt thereof" are meant to include salts of the base additive. Examples of pharmaceutically acceptable base addition salts include sodium, potassium, calcium, ammonium, organic amino, or magnesium salt, or a similar salt.

In certain aspects and as recognized in the art, graphene according to the present disclosure may include a certain amount of oxygen. Without wishing to be bound by any particular theory, the base additive of the present disclosure may in turn react with "acidic" oxygen of the graphene. Table A provides a representative valuation for carbon (as graphene), oxygen, and base according to a range applicable to examples of the present disclosure. As such, the composition may comprise from 0.1 to 100 equivalent base per acid group oxygen content of the graphene. In further examples, the composition may comprise from about 0.3 to 50 equivalent base or from 0.5 to 20 equivalent base per acid group (denoted as 0.1 to 100 equivalents of base). The amount of base added may at least be 0.00165 wt. %.

**Table A.**

| Loading | Min. | Max. | wt. |
|---|---|---|---|
| Carbon (graphene) | 0.05 | 20 | % |
| Total oxygen | 0.004667 | 1.866667 | % |
| Acidic oxygen | 0.0011 | 0.44 | % |
| 0.1-100 equivalents of Base | | | |
| Base | 0.00165 | - | % |

The term "acid or base equivalents" may refers to an equivalent acid or base donating or accepting an equal number of moles of hydrogen or hydronium ions per mole of the acid to which the equivalent acid is being equated, or mole of hydroxide ions to which the equivalent base is being equated. An "acid" can be either an Arrhenius acid, a Brønsted-Lowry acid, or a Lewis acid. The Arrhenius acids are substances or fluids which increase the concentration of hydronium ions (H₃O⁺) in solution. The Brønsted-Lowry acid is a substance which can act as a proton donor. Lewis acids are electron-pair acceptors.

The composition may comprise from about 0.001 wt. % to about 8 wt. % of a base additive, about 0.1 wt. % to about 8 wt. % of a base additive, or from about 0.2 wt. % to about 10 wt. % of a base additive, or from about 0.2 wt. % to about 8 wt. % of a base additive, or from about 0.1 wt. % to about 6 wt. % of a base additive. In certain examples, the base additive may be combined in a masterbatch.

### Additional Additives

The disclosed thermoplastic composition may comprise one or more additives conventionally used in the manufacture of molded thermoplastic parts with the proviso that the optional additives do not adversely affect the desired properties of the resulting composition. Mixtures of optional additives can also be used. Such additives can be mixed at a suitable time during the mixing of the components for forming the composition mixture. Exemplary additives can include ultraviolet agents, ultraviolet stabilizers, heat stabilizers, antistatic agents, anti-microbial agents, anti-drip agents, radiation stabilizers, pigments, dyes, fibers, fillers, plasticizers, fibers, flame retardants, antioxidants, lubricants, wood, glass, and metals, and combinations thereof. According to certain aspects, the polymer compositions may maintain mechanical performance and dielectric strength even with high levels of fillers (for example, greater than 30 wt. % filler based on the total weight of the polymer composition).

The composition disclosed herein can comprise one or more additional fillers. The filler can be selected to impart additional impact strength and/or provide additional characteristics that can be based on the final selected characteristics of the polymer composition. In some aspects, the filler(s) can comprise inorganic materials which can include clay, titanium oxide, asbestos fibers, silicates and silica powders, boron powders, calcium carbonates, talc, kaolin, sulfides, barium compounds, metals and metal oxides, wollastonite, glass spheres, glass fibers, flaked fillers, fibrous fillers, natural fillers and reinforcements, and reinforcing organic fibrous fillers. In certain aspects, the composition may comprise a glass fiber filler. For example, the composition may comprise from about 0.01 wt. % to about 25 wt. %, from about 10 wt. % to about 25 wt. %, from about 15 wt. % to about 25 wt. %, of a glass fiber filler based on the total weight of the composition. In yet further aspects, the composition may be free or substantially free of a glass filler.

Appropriate fillers or reinforcing agents can include, for example, mica, clay, feldspar, quartz, quartzite, perlite, tripoli, diatomaceous earth, aluminum silicate (mullite), synthetic calcium silicate, fused silica, fumed silica, sand, boron-nitride powder, boron-silicate powder, calcium sulfate, calcium carbonates (such as chalk, limestone, marble, and synthetic precipitated calcium carbonates) talc (including fibrous, modular, needle shaped, and lamellar talc), wollastonite, hollow or solid glass spheres, silicate spheres, cenospheres, aluminosilicate or (armospheres), kaolin, whiskers of silicon carbide, alumina, boron carbide, iron, nickel, or copper, continuous and chopped carbon fibers or glass fibers, molybdenum sulfide, zinc sulfide, barium titanate, barium ferrite, barium sulfate, heavy spar, titanium dioxide, aluminum oxide, magnesium oxide, particulate or fibrous aluminum, bronze, zinc, copper, or nickel, glass flakes, flaked silicon carbide, flaked aluminum diboride, flaked aluminum, steel flakes, natural fillers such as wood flour, fibrous cellulose, cotton, sisal, jute, starch , lignin, ground nut shells, or rice grain husks, reinforcing organic fibrous fillers such as poly(ether ketone), polyimide, polybenzoxazole, poly(phenylene sulfide), polyesters, polyethylene, aromatic polyamides, aromatic polyimides, polyetherimides, polytetrafluoroethylene, and poly(vinyl alcohol), as well combinations comprising at least one of the foregoing fillers or reinforcing agents. The fillers and reinforcing agents can be coated or surface treated, with silanes for example, to improve adhesion and dispersion with the polymer matrix. Fillers generally can be used in amounts of 1 to 200 parts by weight, based on 100 parts by weight of based on 100 parts by weight of the total composition.

In some aspects, the thermoplastic composition may comprise a synergist. In various examples fillers may serve as flame retardant synergists. The synergist facilitates an improvement in the flame retardant properties when added to the flame retardant composition over a comparative composition that contains all of the same ingredients in the same quantities except for the synergist. Examples of mineral fillers that may serve as synergists are mica, talc, calcium carbonate, dolomite, wollastonite, barium sulfate, silica, kaolin, feldspar, barytes, or the like, or a combination comprising at least one of the foregoing mineral fillers. Metal synergists, e.g., antimony oxide, can also be used with the flame retardant. In one example, the synergist may comprise magnesium hydroxide and phosphoric acid. The mineral filler may have an average particle size of about 0.1 to about 20 micrometers, specifically about 0.5 to about 10 micrometers, and more specifically about 1 to about 3 micrometers.

The thermoplastic composition can comprise an antioxidant. The antioxidants can include either a primary or a secondary antioxidant. For example, antioxidants can include organophosphites such as tris(nonyl phenyl)phosphite, tris(2,4-di-t-butylphenyl)phosphite, bis(2,4-di-t-butylphenyl)pentaerythritol diphosphite, distearyl pentaerythritol diphosphite or the like; alkylated monophenols or polyphenols; alkylated reaction products of polyphenols with dienes, such as tetrakis[methylene(3,5-di-tert-butyl-4-hydroxyhydrocinnamate)] methane, or the like; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxyphenyl)propionate, pentaerythrityl-tetrakis[3-(3,5-di-tert-butyl-4-hydroxyphenyl)propionate or the like; amides of beta-(3,5-di-tert-butyl-4-hydroxyphenyl)-propionic acid or the like, or combinations including at least one of the foregoing antioxidants. Antioxidants can generally be used in amounts of from 0.01 to 0.5 parts by weight, based on 100 parts by weight of the total composition, excluding any filler.

In various aspects, the thermoplastic composition can comprise a mold release agent. Exemplary mold releasing agents can include for example, metal stearate, stearyl stearate, pentaerythritol tetrastearate, beeswax, montan wax, paraffin wax, or the like, or combinations including at least one of the foregoing mold release agents. Mold releasing agents are generally used in amounts of from about 0.1 to about 1.0 parts by weight, based on 100 parts by weight of the total composition, excluding any filler.

In an aspect, the thermoplastic composition can comprise a heat stabilizer. As an example, heat stabilizers can include, for example, organo phosphites such as triphenyl phosphite, tris-(2,6-dimethylphenyl)phosphite, tris-(mixed mono-and dinonylphenyl)phosphite or the like; phosphonates such as dimethylbenzene phosphonate or the like, phosphates such as trimethyl phosphate, or the like, or combinations including at least one of the foregoing heat stabilizers. Heat stabilizers can generally be used in amounts of from 0.01 to 0.5 parts by weight based on 100 parts by weight of the total composition, excluding any filler.

In further aspects, light stabilizers can be present in the thermoplastic composition. Exemplary light stabilizers can include, for example, benzotriazoles such as 2-(2-hydroxy-5-methylphenyl)benzotriazole, 2-(2-hydroxy-5-tert-octylphenyl)-benzotriazole and 2-hydroxy-4-n-octoxy benzophenone or the like or combinations including at least one of the foregoing light stabilizers. Light stabilizers can generally be used in amounts of from about 0.1 to about 1.0 parts by weight, based on 100 parts by weight of the total composition, excluding any filler. The thermoplastic composition can also comprise plasticizers. For example, plasticizers can include phthalic acid esters such as dioctyl-4,5-epoxy-hexahydrophthalate, tris-(octoxycarbonylethyl) isocyanurate, tristearin, epoxidized soybean oil or the like, or combinations including at least one of the foregoing plasticizers. Plasticizers are generally used in amounts of from about 0.5 to about 3.0 parts by weight, based on 100 parts by weight of the total composition, excluding any filler.

Ultraviolet (UV) absorbers can also be present in the disclosed thermoplastic composition. Exemplary ultraviolet absorbers can include for example, hydroxybenzophenones; hydroxybenzotriazoles; hydroxybenzotriazines; cyanoacrylates; oxanilides; benzoxazinones; 2- (2H-benzotriazol-2-yl)-4-(1,1,3,3-tetramethylbutyl)-phenol (CYASORB^{™} 5411); 2-hydroxy-4-n-octyloxybenzophenone (CYASORB^{™} 531); 2-[4,6-bis(2,4-dimethylphenyl)-1,3,5-triazin-2-yl]- 5-(octyloxy)-phenol (CYASORB^{™} 1164); 2,2'-(1,4- phenylene)bis(4H-3,1-benzoxazin-4-one) (CYASORB^{™} UV- 3638); 1,3-bis[(2-cyano-3,3-diphenylacryloyl)oxy]-2,2-bis[[(2-cyano-3, 3-diphenylacryloyl)oxy]methyl]propane (UVINUL^{™} 3030); 2,2'-(1,4-phenylene) bis(4H-3,1-benzoxazin-4-one); 1,3-bis[(2-cyano-3,3-diphenylacryloyl)oxy] -2,2-bis[[(2-cyano-3,3-diphenylacryloyl)oxy]methyl]propane; nano-size inorganic materials such as titanium oxide, cerium oxide, and zinc oxide, all with particle size less than 100 nanometers; or the like, or combinations including at least one of the foregoing UV absorbers. UV absorbers are generally used in amounts of from 0.01 to 3.0 parts by weight, based on 100 parts by weight of the total composition, excluding any filler.

The thermoplastic composition can further comprise a lubricant. As an example, lubricants can include for example, fatty acid esters such as alkyl stearyl esters, e.g., methyl stearate or the like; mixtures of methyl stearate and hydrophilic and hydrophobic surfactants including polyethylene glycol polymers, polypropylene glycol polymers, and copolymers thereof e.g., methyl stearate and polyethylene-polypropylene glycol copolymers in a suitable solvent; or combinations including at least one of the foregoing lubricants. Lubricants can generally be used in amounts of from about 0.1 to about 5 parts by weight, based on 100 parts by weight of the total composition, excluding any filler.

Anti-drip agents can also be used in the composition, for example a fibril forming or non-fibril forming fluoropolymer such as polytetrafluoroethylene (PTFE). The anti-drip agent can be encapsulated by a rigid copolymer, for example styrene-acrylonitrile copolymer (SAN). PTFE encapsulated in SAN is known as TSAN. In one example, TSAN can comprise 50 wt. % PTFE and 50 wt. % SAN, based on the total weight of the encapsulated fluoropolymer. The SAN can comprise, for example, 75 wt. % styrene and 25 wt. % acrylonitrile based on the total weight of the copolymer. An anti-drip agent, such as TSAN, can be used in amounts of 0.1 to 10 parts by weight, based on 100 parts by weight of the total composition, excluding any filler.

As an example, the disclosed composition can comprise an impact modifier. The impact modifier can be a chemically reactive impact modifier. By definition, a chemically reactive impact modifier can have at least one reactive group such that when the impact modifier is added to a polymer composition, the impact properties of the composition (expressed in the values of the IZOD impact) are improved. In some examples, the chemically reactive impact modifier can be an ethylene copolymer with reactive functional groups selected from, but not limited to, anhydride, carboxyl, hydroxyl, and epoxy.

In further aspects of the present disclosure, the composition can comprise a rubbery impact modifier. The rubber impact modifier can be a polymeric material which, at room temperature, is capable of recovering substantially in shape and size after removal of a force. However, the rubbery impact modifier should typically have a glass transition temperature of less than 0° C. In certain aspects, the glass transition temperature (T_{g}) can be less than -5° C, -10° C, -15° C, with a T_{g} of less than -30° C typically providing better performance. Representative rubbery impact modifiers can include, for example, functionalized polyolefin ethylene-acrylate terpolymers, such as ethylene-acrylic esters-maleic anhydride (MAH) or glycidyl methacrylate (GMA). The functionalized rubbery polymer can optionally contain repeat units in its backbone which are derived from an anhydride group containing monomer, such as maleic anhydride. In another scenario, the functionalized rubbery polymer can contain anhydride moieties which are grafted onto the polymer in a post polymerization step.

### Properties and Articles

In certain aspects, the disclosed compositions feature enhanced graphene and graphene oxide dispersion or availability in polymers/elastomers/plastics via in-situ surface-modified graphene or graphene oxide. Improved dispersion is evidenced by the improvement in certain physical properties compared to a reference composition in the absence of the base additive (and thereby in-situ generation of the surface modified graphene or graphene oxide). The compositions may exhibit improved conductivity and/or multi-axial impact strength.

More specifically, these compositions may exhibit increased multi-axial impact MAI strength and/or a decrease in specific volume resistivity when compared to a reference composition in the absence of the base additive when tested in accordance with ISO 6603 and ASTM D4496, respectively. The composition may exhibit a multi-axial impact strength of at least 4 J when tested in accordance with ISO 6603. In further examples, the composition may exhibit an unnotched Izod impact strength of at least 90 KJ/m² when tested in accordance with ISO 180/1U.

In various aspects, the present disclosure relates to articles comprising the compositions herein. The compositions can be molded into useful shaped articles by a variety of means such as injection molding, extrusion, rotational molding, blow molding and thermoforming to form articles. The compositions can be useful in the manufacture of articles requiring materials with good flow, good impact strength, and good dielectric strength. In various aspects, the compositions may be useful for as well as electrically conducting purposes.

The advantageous characteristics of the compositions disclosed herein can make them appropriate for an array of uses. For example, the disclosed compositions may be useful for the manufacture of electrostatic dissipative housings, materials/parts with improved barrier properties, thermally conductive materials/parts/housings, or parts/housings with improved impact performance.

### Methods for Making the Composition

Aspects of the disclosure further relate to methods for making a composition including a thermoplastic polymer component. In many aspects, the compositions can be prepared according to a variety of methods. The compositions of the present disclosure can be blended, compounded, or otherwise combined with the aforementioned ingredients by a variety of methods involving intimate admixing of the materials with any additional additives desired in the formulation. Because of the availability of melt blending equipment in commercial polymer processing facilities, melt processing methods can be used. In various further aspects, the equipment used in such melt processing methods can include, but is not limited to, co-rotating and counter-rotating extruders, single screw extruders, co-kneaders, disc-pack processors and various other types of extrusion equipment. In a further aspect, the extruder is a twin-screw extruder. In various further aspects, the composition can be processed in an extruder at temperatures from about 180 °C to about 350 °C, particularly 250 °C to 320 °C.

As an example, the composition may be formed by combining, to form a mixture: from about 60 wt. % to about 99.85 wt. % of a polyamide resin, from about 0.05 wt. % to about 20 wt. % of graphene; and from about 0.001 wt. to about 8 wt. % of a base additive, wherein the weight percent values of (i), (ii), and (iii) are based on the total weight of the mixture and the combined weight percent value of all components does not exceed 100 wt. %. The resulting mixture may be compounded in a melt extruder to provide the composition. The compounding enables compounding of the graphene with the base additive to result in a modified graphene. Compounding may proceed at a temperature of from about 250 °C to about 320 °C.

Methods may further comprise processing the composition to provide a plaque of a desired thickness. Plaques can be extruded, injection molded, compression molded or injection-compression molded, and may have a thickness between about 0.5 mm and 6 mm. Other processes could also be applied to the thin thermoplastic film, including but not limited to, lamination, co-extrusion, thermo-forming or hot pressing. In such aspects, further layers of other materials (for example, other thermoplastic polymer layers, metallic layers, etc.) could be combined with the composition.

Various combinations of elements of this disclosure are encompassed by this disclosure, e.g., combinations of elements from dependent claims that depend upon the same independent claim.

### Definitions

It is also to be understood that the terminology used herein is for the purpose of describing particular aspects only and is not intended to be limiting. As used in the specification and in the claims, the term "comprising" can include the embodiments "consisting of' and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a thermoplastic polymer component" includes mixtures of two or more thermoplastic polymer components. As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated ±10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

As used herein, the terms "optional" or "optionally" means that the subsequently described event or circumstance can or cannot occur, and that the description includes instances where said event or circumstance occurs and instances where it does not. For example, the phrase "optional additional processes" means that the additional processes can or cannot be included and that the description includes methods that both include and that do not include the additional processes.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

The terms "residues" and "structural units", used in reference to the constituents of the polymers, are synonymous throughout the specification.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation is 100.

Unless otherwise stated to the contrary herein, all test standards are the most recent standard in effect at the time of filing this application. Each of the materials disclosed herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

### Aspects of the Disclosure

The present disclosure pertains to and includes at least the following aspects.

Aspect 1. A composition comprising: (i) from about 60 wt. % to about 99.85 wt. % of a polar polymer resin, (ii) from about 0.05 wt. % to about 20 wt. % of graphene; and (iii) from about 0.001 wt. % to about 8 wt. % of a base additive, wherein the graphene and base additive are combined in the composition to provide a modified graphene, wherein a molded sample of the composition exhibits a greater multi-axial impact strength than a reference composition in the absence of the base additive when tested in accordance with ISO 6603, wherein the combined weight percent value of all components does not exceed 100 wt. %, and all weight percent values are based on the total weight of the composition.

Aspect 2. The composition according to aspect 1, wherein the polar polymer resin comprises a polyamide selected from a nylon-4, nylon-4,6 (PA 46), , nylon-6,10, nylon-6,9, nylon-6,12, nylon-9T, copolymer of nylon-6,6 and nylon-6, nylon 610 (PA610), nylon 11 (PA11), nylon 12 (PA 12), nylon 6-3-T (PA 6-3-T), polyamide MXD6 (PA-MXD6), polyphthalamide (PPA) and/or poly-ether-block amide, polycaprolactam, polyhexamethylene adipamide, polyhexamethylene sebacamide, polyamide of hexamethylene diamine and n-dodecanedioc acid, polyundecanolactam, polydodecanolactam, polyphthalamide, polyhexamethylene terepthalamide, polyamide of hexamethylenediamine and terephthalic acid, or a combination thereof.

Aspect 3. The composition according to aspect 1, wherein the polar polymer resin comprises polyamide-6.

Aspect 4. The composition according to any one of aspects 1-3, wherein the graphene has an oxygen content of up to 10 wt. % based on the total weight of the graphene.

Aspect 5. The composition according to any one of aspects 1-4, wherein the base additive comprises an organic or inorganic base.

Aspect 6. The composition according to any one of aspects 1-4, wherein the base additive comprises potassium carbonate, sodium stearate, potassium hydrogen carbonate, sodium acetate, potassium acetate, sodium formate and potassium formate, or a combination thereof.

Aspect 7. The composition according to any one of aspects 1-6, wherein the composition exhibits a multi-axial impact strength of at least 4 J when tested in accordance with ISO 6603.

Aspect 8. The composition according to any one of aspects 1-6, wherein the composition exhibits an unnotched Izod impact strength of at least 90 KJ/m² when tested in accordance with ISO 180/1U.

Aspect 9. The composition according to any one of aspects 1-8, wherein the composition further comprises a mold release agent.

Aspect 10. The composition according to any one of aspects 1-8, wherein the composition further comprises from about 0.01 wt. % to about 1 wt. % of a mold release agent.

Aspect 11. The composition according to any one of aspects 1-10, wherein the composition exhibits improved graphene dispersion when compared to a reference composition in the absence of the base additive.

Aspect 12. The composition according to any one of aspects 1-11, wherein the composition comprises from about 1 wt. % to about 20 wt. % of graphene and where a molded sample of the composition exhibits a lower specific volume resistivity than a reference composition in the absence of the base additive when tested in accordance with ASTM D4496.

Aspect 13. The composition according to any one of aspects 1-11, wherein the composition has from about 0.1 to about 100 equivalent base per acid group oxygen content of the graphene.

Aspect 14. An article formed from the composition of any one of aspects 1-12.

Aspect 15A. A method of forming a composition, the method comprising: combining to form a mixture: from about 60 wt. % to about 99.85 wt. % of a polyamide resin, from about 0.05 wt. % to about 20 wt. % of graphene; and from about 0.001 wt. to about 8 wt. % of a base additive, wherein the weight percent values of (i), (ii), and (iii) are based on the total weight of the mixture and the combined weight percent value of all components does not exceed 100 wt. %; (b) compounding the mixture in a melt extruder to provide a composition wherein the compounding the graphene with the base results in a modified graphene, and wherein the composition either exhibits a greater specific volume resistivity than a reference composition in the absence of the base additive when tested in accordance with ASTM D4496, or exhibits a greater multi axial impact strength than the reference composition when tested in accordance with MAI ISO 6603.

Aspect 15B. A method of forming a composition, the method comprising: combining to form a mixture: from about 60 wt. % to about 99.85 wt. % of a polyamide resin, from about 0.05 wt. % to about 20 wt. % of graphene; and from about 0.001 wt. to about 8 wt. % of a base additive, wherein the weight percent values of (i), (ii), and (iii) are based on the total weight of the mixture and the combined weight percent value of all components does not exceed 100 wt. %; (b) compounding the mixture in a melt extruder to provide a composition wherein the compounding the graphene with the base results in a modified graphene, wherein the composition either exhibits a lower specific volume resistivity than a reference composition in the absence of the base additive when tested in accordance with ASTM D4496, or exhibits a greater multi axial impact strength than the reference composition when tested in accordance with MAI ISO 6603.

Aspect 16. The method of aspect 15A or 15B, wherein the polyamide resin comprises polyamide-6.

Aspect 17. The method of aspect 15A or 15B, wherein the compounding proceeds at a temperature of from about 250 °C to about 320 °C.

Aspect 18. The method of any one of aspects 15A-16, wherein the graphene has an oxygen content of up to 10 wt. % based on the total weight of the graphene.

### EXAMPLES

The following examples are put forth so as to provide those of ordinary skill in the art with a complete disclosure and description of how the compounds, compositions, articles, devices and/or methods claimed herein are made and evaluated and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of mixing conditions, e.g., component concentrations, extruder design, feed rates, screw speeds, temperatures, pressures and other mixing ranges and conditions that can be used to optimize the product purity and yield obtained from the described process. Only reasonable and routine experimentation will be required to optimize such process conditions.

### Compounding and Molding Conditions.

Formulations for the present disclosure were compounded on a DSM Xplore^{™} MC15 twin-screw micro compounder unit (MCU) with co-rotating conical twin screws according to the conditions presented in Table 1. The samples were mixed for 2 minutes at constant speed (100 rpm). After 2 min, the recirculation is turned off and the material is directly unloaded into a heated (270 °C) and removable transfer barrel and transferred with a plunger and injected into the temperature-controlled mold with the plunger powered by compressed air using a DSM Xplore^{™} IM 12 micro injection molder. ISO impact bars (80 mm length × 10 mmwidth × 4 mm height) were molded according to the conditions presented in Table 2.

**Table 1. Compounding conditions**

| **Compounder Type** | | **Micro compounder** |
|---|---|---|
| **Barrel Temp.** | (°C) | 270 |
| **Screw Speed** | (RPM) | 100 |
| **Mixing time** | (s) | 120 |
| **N₂ (inert gas)** | | No |

**Table 2. Injection Molding Parameters.**

| | | |
|---|---|---|
| **T Accu (barrel)** | (°C) | 270 |
| **T mold** | (°C) | 60 |
| **pressure(s) - impact bars** | (bar) | 4/7/7 |
| **Pressure/Holding time(s) - impact bars** | (s) | 0.5/5.0/20.0 |

Another series of PA6/graphene formulations were extruded on a Coperion 26 mm co-rotating twin-screw extruder using the conditions listed in Table 3, followed by injection molding into test samples using an Engel ES500/110 HLU injection molding machine using the conditions listed in Table 4.

**Table 3. Compounding conditions for PA6/graphene formulations**

| **Compounder Type** | | Coperion 26mm TSE |
|---|---|---|
| **Barrel Size** | | 26 mm |
| **Die** | | 2^{∗}3 mm |
| **Feed (Zone 0) Temp** | °C | |
| **Zone 1 Temp** | °C | 200 |
| **Zone 2 Temp** | °C | 220 |
| **Zone 3 Temp** | °C | 250 |
| **Zone 4 Temp** | °C | 260 |
| **Zone 5 Temp** | °C | 260 |
| **Zone 6 Temp** | °C | 260 |
| **Zone 7 Temp** | °C | 260 |
| **Zone 8 Temp** | °C | 260 |
| **Zone 9 Temp** | °C | 260 |
| **Zone 10 Temp** | °C | 260 |
| **Die temp** | °C | 270 |
| **Screw speed** | rpm | 600 |
| **Throughput** | Kg/hr | 10 |
| **Torque** | % | 32 |
| **Vacuum 1** | Bar | 0.7 |

The specific injection molding conditions are presented in Table 4.

**Table 4. Injection molding conditions PA6/graphene formulations**

| **Molding** | **Unit** | **1 tensile+2 impact bars** | **Disk 85mm*3mm** |
|---|---|---|---|
| **Pre-drying Time** | hr. | 4 | 4 |
| **Pre-drying Temp** | °C | 80 | 80 |
| **Hopper Temp** | °C | 40 | 40 |
| **Zone 1 Temp** | °C | 220 | 220 |
| **Zone 2 Temp** | °C | 230 | 230 |
| **Zone 3 Temp** | °C | 240 | 240 |
| **Nozzle Temp** | °C | 235 | 235 |
| **Mold Temp** | °C | 70 | 70 |
| **Back pressure** | bar | 5 | 5 |
| **Injection speed** | mm/s | 25 | 25-28 |
| **Holding pressure** | bar | 30 | 30 |

A series of PP/graphene formulations was extruded on a 25 mm Werner &Pfleiderer ZSK twin-screw extruder using the conditions listed in Table 5, followed by injection molding into the right set of test samples using an Engel Victory 90 injection molding machine.

**Table 5. Compounding conditions for PP/graphene formulations**

| **Compounding** | **Unit** | |
|---|---|---|
| **Compounder Type** | | D-Line |
| **Barrel Size** | | 25mm |
| **Die** | | 2^{∗}3mm |
| **Feed (Zone 0) Temp** | °C | 150 |
| **Zone 1 Temp** | °C | 200 |
| **Zone 2 Temp** | °C | 240 |
| **Zone 3 Temp** | °C | 240 |
| **Zone 4 Temp** | °C | 240 |
| **Zone 5 Temp** | °C | 240 |
| **Zone 6 Temp** | °C | 240 |
| **Zone 7 Temp** | °C | 240 |
| **Zone 8 Temp** | °C | 240 |
| **Zone 9 Temp** | °C | 240 |
| **Zone 10 Temp** | °C | 240 |
| **Die temp** | °C | 240 |
| **Screw speed** | rpm | 300 |
| **Throughput** | Kg/hr | 20 |
| **Torque** | % | 45 |
| **Vacuum 1** | Bar | 0.6 |

Injection molding conditions for the PP formulations are shown in Table 6.

**Table 6. Injection Molding Conditions for PP/graphene formulations**

| **Molding** | **Unit** | **Izod 4 mm impact bar** | **Disk 85 mm × 3 mm** |
|---|---|---|---|
| **Pre-drying Time** | hr. | 4 | 4 |
| **Pre-drying Temp** | °C | 75 | 75 |
| **Hopper Temp** | °C | 50 | 50 |
| **Zone 1 Temp** | °C | 220 | 200 |
| **Zone 2 Temp** | °C | 220 | 220 |
| **Zone 3 Temp** | °C | 240 | 240 |
| **Nozzle Temp** | °C | 230 | 230 |
| **Mold Temp** | °C | 70 | 70 |
| **Back pressure** | bar | 5 | 5 |
| **Injection speed** | mm/s | 25 | 25 |
| **Holding pressure** | bar | 50 | 45 |

### Formulations and Properties.

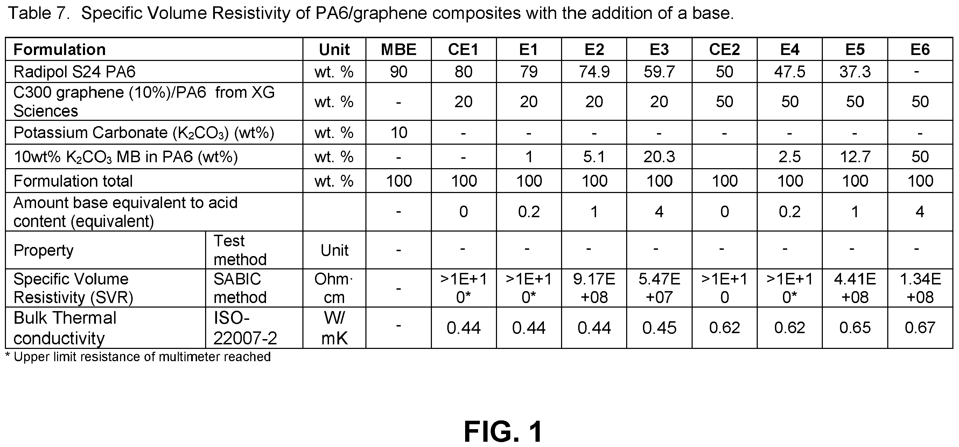

In an initial analysis, formulations comprising polyamide and graphene were prepared. A commercially available exfoliated graphene grade (XG-Science C300) was used, containing oxygen in the form of ether, hydroxyl, ketone or carboxylic acid groups. Depending on the exact C-grade the oxygen content can vary between 5-8 atomic %, with the majority of the oxygen functional groups being organic acid groups. The oxygen groups were likely been introduced by sequential oxidation and reduction steps used for chemical exfoliation, however, other methods may have been used. Table 7 (shown in FIG. 1) presents polyamide formulations prepared with (E1-E6) and without (CE1, CE2) the base, potassium carbonate (K₂CO₃) in a PA-6 MB and a graphene/PA6 masterbatch from XG-Sciences. The K₂CO₃ was introduced as a base during compounding in a melt extruder.

Specific Volume Resistivity was measured by notching a sample bar on both ends followed by a cold fracture at about -60 °C. The fractured surfaces are treated with silver paint and dried. The resistance through the bar was measured with a multi - meter and the volume resistivity (in Ohm (2) -cm) was calculated according to: volume resistivity = (R^{∗}*w*^{∗}*h* /1), where *R* is the electrical resistance (in 2), *w* the width of the bar in cm , *h* the height of the bar in cm, and 1 is the sample length (the electrical distance) in cm. The comparative samples containing 2 wt.% (CE1) or 5 wt.% (CE2) showed values above the max resistance reading of this specific Keithley set up (5E+11 Ohm), indicating that the SVR value for these materials is above E+10 Ohm.cm. Theoretically, however, a percolating network with low resistivity should have been formed at these low loadings (assuming the following graphene platelet dimensions: 1000 × 1000 × 10 nm). As such, the comparative samples appeared to have very poor graphene distributions based on the SVR observed. This changes when sufficient base, in the form of potassium carbonate, is added to the formulation. As can be inferred from examples E2, E3, E5and E6, these materials display moderate conductivity showing that the addition of base improved the dispersion of the graphene platelets. Lower amounts of base (E1, E4) did not show any measurable effect on the conductivity. It could still have a positive effect on graphene dispersion, but too small to be measurable with the current set up. Without wishing to be bound to any particular theory, the K₂CO₃ was believed to impart a negative charge at the graphene particles. The formulations and their properties presented in Table 7 demonstrated this improvement in the SVR.

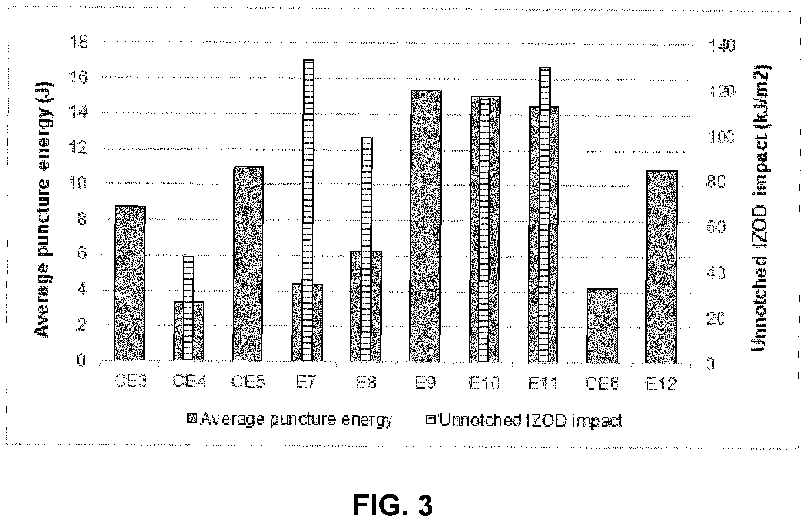

Polyamide formulations were then prepared with or without a base, either potassium carbonate K₂CO₃, sodium stearate or combinations of these two bases. The base was introduced during compounding in a melt extruder. The formulations and their properties are presented in Table 8 (shown in FIG. 3) and demonstrated a max 4,5-and 2.9-fold improvement in the MAI and unnotched IZOD, respectively.

The introduction of sodium stearate improved the MAI and IUI (compare CE4 with E7) which indicated a better dispersion of the graphene platelets. Compared to sodium stearate, potassium carbonate however provided a greater improvement in MAI at even lower loadings (compare formulations CE4, E7 and E8). The combination of the two bases appears to be synergistic for multi axial impact and yielded a significant increase in the IZOD impact (compare E7 and E8 to E10 and E11).

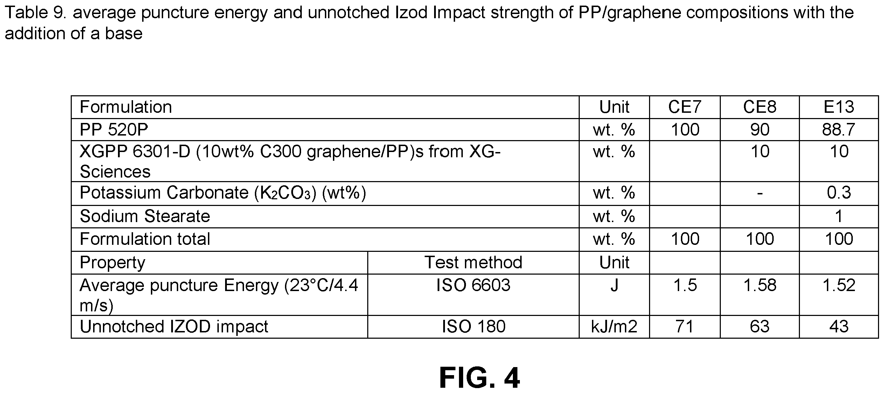

Further adding a release agent, such as PETS, to PA6 increased the MAI (compare CE4 and CE5) and changed the baseline. Still, however there was a significant positive effect of adding graphene (compare CE3 and CE5) and an even larger positive effect of adding the bases on the MAI values (compare CE5 to E9). FIG. 4 is a graphical representation of the Izod impact strength of the samples to demonstrate the influence on the MAI and impact strength of adding a base to the various formulations.

Formulations CE6 and E12 included a different graphene source having lower amounts of oxidized groups. The graphene source for these samples was Graphene Pure G+^{™} having less than 0.6 wt. % oxygen available from Directa^{™} Plus. Still however, adding the bases potassium carbonate/sodium stearate more than doubled the MAI performance, again ascribed to improved graphene dispersion. Thus, the examples demonstrated that the addition of bases during the compounding of graphenes/oxidized graphenes significantly improved the dispersion. With the improved dispersion, properties such IZOD unnotched impact strength as well as multi-axial impact strength were improved.

Formulations comprising PP and a PP-graphene MB as well as a PP- K₂CO₃ MB were prepared. Formulations CE7and CE8 and E13 are presented in Table 9 (shown in FIG 5).

The improvement in impact performance, whether this is the MAI or IZOD unnotched impact performance observed in the PA formulations was not apparent for formulation E13 comprising the K₂CO₃. Without wishing to be bound to any particle theory, it was unclear whether this is due to the lower vol% graphene loading in the PP sample or was related to the identity of the base resin; namely, polyamide being polar and PP being apolar.

The above description is intended to be illustrative, and not restrictive. For example, the above-described examples (or one or more aspects thereof) may be used in combination with each other. Other embodiments can be used, such as by one of ordinary skill in the art upon reviewing the above description. The Abstract is provided to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description as examples or embodiments, with each claim standing on its own as a separate embodiment, and it is contemplated that such embodiments can be combined with each other in various combinations or permutations. The scope of the disclosure should be determined with reference to the appended claims, along with the full scope of equivalents to which such claims are entitled.

It will be apparent to those skilled in the art that various modifications and variations can be made in the present disclosure without departing from the scope or spirit of the disclosure. Other embodiments of the disclosure will be apparent to those skilled in the art from consideration of the specification and practice of the disclosure disclosed herein. It is intended that the specification and examples be considered as exemplary only, with a true scope and spirit of the disclosure being indicated by the following claims.

The patentable scope of the disclosure is defined by the claims, and can include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A composition comprising:
(i) from about 60 wt. % to about 99.85 wt. % of a polar polymer resin,
(ii) from about 0.05 wt. % to about 20 wt. % of graphene; and
(iii) from about 0.001 wt. % to about 8 wt. % of a base additive,
wherein the graphene and base additive are combined in the composition to provide a modified graphene,
wherein a molded sample of the composition exhibits a greater multi-axial impact strength than a reference composition in the absence of the base additive when tested in accordance with ISO 6603,
wherein the combined weight percent value of all components does not exceed 100 wt. %, and all weight percent values are based on the total weight of the composition.

2. The composition according to claim 1, wherein the polar polymer resin comprises a polyamide selected from a nylon-4, nylon-4,6 (PA 46), nylon-6,10, nylon-6,9, nylon-6,12, nylon-9T, copolymer of nylon-6,6 and nylon-6, nylon 610 (PA610), nylon 11 (PA11), nylon 12 (PA 12), nylon 6-3-T (PA 6-3-T), polyamide MXD6 (PA-MXD6), polyphthalamide (PPA) and/or poly-ether-block amide, polycaprolactam, polyhexamethylene adipamide, polyhexamethylene sebacamide, polyamide of hexamethylene diamine and n-dodecanedioc acid, polyundecanolactam, polydodecanolactam, polyphthalamide, polyhexamethylene terepthalamide, polyamide of hexamethylenediamine and terephthalic acid, or a combination thereof.

3. The composition according to claim 1, wherein the polar polymer resin comprises polyamide-6.

4. The composition according to any one of claims 1-3, wherein the graphene has an oxygen content of up to 10 wt. % based on the total weight of the graphene.

5. The composition according to any one of claims 1-4, wherein the base additive comprises an organic or inorganic base.

6. The composition according to any one of claims 1-4, wherein the base additive comprises potassium carbonate, sodium stearate, potassium hydrogen carbonate, sodium acetate, potassium acetate, sodium formate and potassium formate, or a combination thereof.

7. The composition according to any one of claims 1-6, wherein the composition exhibits a multi-axial impact strength of at least 4 J when tested in accordance with ISO 6603.

8. The composition according to any one of claims 1-6, wherein the composition exhibits an unnotched Izod impact strength of at least 90 KJ/m² when tested in accordance with ISO 180/1U.

9. The composition according to any one of claims 1-8, wherein the composition further comprises a mold release agent.

10. The composition according to any one of claims 1-8, wherein the composition further comprises from about 0.01 wt. % to about 1 wt. % of a mold release agent.

11. The composition according to any one of claims 1-10, wherein the composition exhibits improved graphene dispersion when compared to a reference composition in the absence of the base additive.

12. The composition according to any one of claims 1-11, wherein the composition comprises from about 1 wt. % to about 20 wt. % of graphene and where a molded sample of the composition exhibits a lower specific volume resistivity than a reference composition in the absence of the base additive when tested in accordance with ASTM D4496.

13. The composition according to any one of claims 1-11, wherein the composition has from about 0.1 to about 100 equivalent base per acid group oxygen content of the graphene.

14. An article formed from the composition of any one of claims 1-13.

15. A method of forming a composition, the method comprising:
(a) combining to form a mixture:
(i) from about 60 wt. % to about 99.85 wt. % of a polyamide resin,
(ii) from about 0.05 wt. % to about 20 wt. % of graphene; and
(iii) from about 0.001 wt. to about 8 wt. % of a base additive,
wherein the weight percent values of (i), (ii), and (iii) are based on the total weight of the mixture and the combined weight percent value of all components does not exceed 100 wt. %;
(b) compounding the mixture in a melt extruder to provide a composition wherein the compounding the graphene with the base results in a modified graphene, and
wherein the composition exhibits either a lower specific volume resistivity than a reference composition in the absence of the base additive when tested in accordance with ASTM D4496, or wherein the composition exhibits a greater multi axial impact strength than the reference composition when tested in accordance with MAI ISO 6603.
